# EUROPEAN PATENT APPLICATION

(11) **EP 1 313 045 A1**
(43) Date of publication of application: **21.05.2003**
(21) Application number: 01941096.8
(22) Date of filing: 19.06.2001
(51) Int. Cl.: G06F 17/60, G06F 13/00

(54) **INFORMATION UTILIZING SYSTEM USING MOBILE TERMINAL DEVICE**

(30) Priority: 19.06.2000 JP 2000183276; 19.06.2000 JP 2000183323
(71) Applicant: Sony Corporation, Tokyo 141-0001 (JP)
(72) Inventor: YUI, Nobumasa, c/o Sony Corporation, Shinagawa-ku, Tokyo (JP); KITADAI, Susumu, HONG KONG MARKETING COMPANY, 33 Hysan Avenue, Causeway Bay, Hong Kong (CN)
(74) Representative: Pratt, Richard Wilson
(86) International application number: JP0105223
(87) International publication number: WO01098973

(57) **Abstract**

An information utilizing system including a hatch number conversion system and capable of a streamlined charging. In the information utilizing system (1), a terminal device (17) connected to a network (3) sends a hatch number to the latter, and receives URL corresponding to the hatch number from a hatch server (5). The terminal device (17) uses the URL for accessing information servers (7). The hatch server (5) counts accesses to each of the information servers (7), and charges each information server (7) according to the access count.

## Description

### Technical Field

The present invention relates to an information utilizing system and the like for utilizing information available from an information server via a terminal device such as a mobile phone or the like.

### Background Art

It has started to utilize information provided from an information server on the internet by accessing the information server on the internet using a mobile phone or the like. In this case, however, as a jog dial or the like on the mobile phone has to be operated several times to access a predetermined information server, there is a problem that the operation is troublesome. On this account, a service is being developed in which it is possible for a user to quickly access such information server based on the URL or the like corresponding to a previously assigned code or the like (referred to as "hatch code" hereinafter) by entering such a hatch code. The hatch code and the URL are stored in a predetermined storage means, the storage means is searched based on the entered hatch code, and the corresponding URL is transmitted to a user terminal device.

However, there is not yet available any appropriate charging system in case of providing such service, and accordingly such a charging system has been demanded.

### Disclosure of the Invention

Accordingly, the present invention has an object to overcome the above-mentioned drawbacks of the related art by providing an information utilizing system capable of a streamlined charging.

The above object can be attained by providing an information utilizing system in which a plurality of information servers and user-side terminal devices are connected to each other via a network so that the user-side terminal devices can utilize information provided from the information servers by accessing the information servers, the system including according to the present invention:
storage means for storing, in a corresponding relation, identification information used for access to the information servers and codes each having an arbitrary number of digits;
identification information conversion means operating, when a user-side terminal enters any of the codes, to take out identification information on one, corresponding to the entered code, of information servers from the storage means and send the identification information to the terminal device;
counting means for counting each access the user-side terminal device has to an information server by entering a code corresponding to the information server;
total access count calculating means for calculating a total count of accesses to each of the codes based on the access count supplied from the counting means; and
charging means for charging an information server corresponding to each code according to a total count of accesses to the code.

Note that the "identification information" in the above system is equivalent to URL or the like of the information server and it is an "identifier" for use to acquire specific information.

In the above system according to the present invention, each access the user-side terminal device has to each code for use to access an information server is counted, and a total count of accesses to the code is calculated based on the access count. The "access count" means a number of times the user-side terminal device has accessed the storage means by entering a corresponding code.

The charging is made according to a total count of accesses to an information provider corresponding to each code.

Also the above object can be attained by providing an information utilizing system in which a plurality of information servers and user-side terminal devices are connected to each other via a network so that the user-side terminal devices can utilize information provided from the information servers by accessing the information servers, the system including according to the present invention:
storage means for storing, in a corresponding relation, identification information used for access to the information servers and codes each having an arbitrary number of digits;
identification information conversion means operating, when a user-side terminal enters any of the codes, to take out identification information on one, corresponding to the entered code, of information servers from the storage means and send the identification information to the terminal device;
counting means for counting each access the user-side terminal device has to an information server by entering a code corresponding to the information server;
total access count calculating means for calculating a total count of accesses to each of the codes based on the access count supplied from the counting means; and
distribution means for collecting a predetermined amount of charge from each user and distributing the collected amount to each information server according to the total count of accesses to the code corresponding to the information server.

In the above system according to the present invention, each access the user-side terminal has to an information server by entering a corresponding code is counted and a total count of accesses to the code is calculated based on the access count. A predetermined amount of charge is collected from the user and the collected amount is distributed to an information server according to the total count of accesses to the code corresponding to the information server.

Also the above object can be attained by providing an information utilizing system in which a plurality of information servers and user-side terminal devices are connected to each other via a network so that the user-side terminal devices can utilize information provided from the information servers by accessing the information servers, the system including according to the present invention:
storage means for storing, in a corresponding relation, identification information used for access to the information servers and codes each having an arbitrary number of digits;
identification information conversion means operating, when a user-side terminal enters any of the codes, to take out identification information on one, corresponding to the entered code, of information servers from the storage means and send the identification information to the terminal device;
counting means for counting each access the user-side terminal device has to an information server by entering a code corresponding to the information server;
first total access count calculating means for calculating a total count of accesses to each of the codes based on the access count supplied from the counting means; and
charging means for charging each user according to a total count of accesses the user has obtained.

In the above system according to the present invention, each access the terminal device has to an information server by using a code corresponding to the information server is counted and a total count of accesses the user has obtained is calculated.

Each user is charged according to a total count of accesses the user has obtained.

Also the above object can be attained by providing a server computer . connected to a plurality of information servers and user-side terminal devices via a network, the computer including according to the present invention:
storage means for storing, in a corresponding relation, identification information used for access to the information servers and codes each having an arbitrary number of digits;
identification information conversion means operating, when a user-side terminal enters any of the codes, to take out identification information on one, corresponding to the entered code, of information servers from the storage means and send the identification information to the terminal device;
counting means for counting each access the user-side terminal device has to an information server by entering a code corresponding to the information server;
total access count calculating means for calculating a total count of accesses to each of the codes based on the access count supplied from the counting means; and
charging means for charging an information server corresponding to each code according to a total count of accesses to the code.

The above server computer counts each access the terminal device has by using a code and calculates a total count of accesses to the code according to the access count. The server computer charges each user for accesses to an information server according to the total access count of accesses to the code corresponding to the information server.

Note that the operations of the server computer may be done by a plurality of computers. The use of the plurality of computers is also included in the technical range of the present invention.

Also the above object can be attained by providing a server computer connected to a plurality of information servers and user-side terminal devices via a network, the computer including according to the present invention:
storage means for storing, in a corresponding relation, identification information used for access to the information servers and codes each having an arbitrary number of digits;
identification information conversion means operating, when a user-side terminal enters any of the codes, to take out identification information on one, corresponding to the entered code, of information servers from the storage means and send the identification information to the terminal device;
counting means for counting each access the user-side terminal device has to an information server by entering a code corresponding to the information server;
total access count calculating means for calculating a total count of accesses to each of the codes based on the access count supplied from the counting means; and
distribution means for collecting a predetermined amount of charge from each user and distributing the collected amount to each information server according to the total count of accesses to the code corresponding to the information server.

According to the present invention, the above server computer counts accesses the user-side terminal device has obtained to an information server by entering a corresponding code and calculates a total count of accesses to the code based on the access count. The server computer collects a predetermined amount of charge from the user and distributes the collected amount to the information server according to the total count of accesses to the code corresponding to the information server.

Note that the operations of the server computer may be done by a plurality of computers. The use of the plurality of computers is also included in the technical range of the present invention.

Also the above object can be attained by providing a server computer connected to a plurality of information servers and user-side terminal devices via a network, the computer including according to the present invention:
storage means for storing, in a corresponding relation, identification information used for access to the information servers and codes each having an arbitrary number of digits;
identification information conversion means operating, when a user-side terminal enters any of the codes, to take out identification information on one, corresponding to the entered code, of information servers from the storage means and send the identification information to the terminal device;
counting means for counting each access the user-side terminal device has to an information server by entering a code corresponding to the information server;
first total access count calculating means for calculating a total count of accesses to each of the codes based on the access count supplied from the counting means; and
charging means for charging each user according to a total count of accesses the user has obtained.

According to the present invention, the above server computer counts each access the terminal device has to an information server by using a code corresponding to the information server and calculates a total count of accesses each user has obtained to the code on the basis of the access count. The server computer charges each user for the accesses to an information server according to the total access count of accesses to the code corresponding to the information server.

Note that the operations of the server computer may be done by a plurality of computers. The use of the plurality of computers is also included in the technical range of the present invention.

Also the above object can be attained by providing a medium having recorded therein a program for operation of an information utilizing system in which a server computer, a plurality of information servers and user-side terminal devices are connected to one another via a network so that the user-side terminal devices can utilize information provided from the information servers by accessing the information servers, the program implementing, according to the present invention, functions of:
storage means for storing, in a corresponding relation, identification information used for access to the information servers and codes each having an arbitrary number of digits;
identification information conversion means operating, when a user-side terminal enters any of the codes, to take out identification information on one, corresponding to the entered code, of information servers from the storage means and send the identification information to the terminal device;
counting means for counting each access the user-side terminal device has to an information server by entering a code corresponding to the information server;
total access count calculating means for calculating a total count of accesses to each of the codes based on the access count supplied from the counting means; and
charging means for charging an information server corresponding to each code according to a total count of accesses to the code.

The above medium holds the program for the aforementioned server computer according to the present invention.

Also the above object can be attained by providing a medium having recorded therein a program for operation of an information utilizing system in which a server computer, a plurality of information servers and user-side terminal devices are connected to one another via a network so that the user-side terminal devices can utilize information provided from the information servers by accessing the information servers, the program implementing, according to the present invention, functions of:
storage means for storing, in a corresponding relation, identification information used for access to the information servers and codes each having an arbitrary number of digits;
identification information conversion means operating, when a user-side terminal enters any of the codes, to take out identification information on one, corresponding to the entered code, of information servers from the storage means and send the identification information to the terminal device;
counting means for counting each access the user-side terminal device has to an information server by entering a code corresponding to the information server;
total access count calculating means for calculating a total count of accesses to each of the codes based on the access count supplied from the counting means; and
distribution means for collecting a predetermined amount of charge from each user and distributing the collected amount to each information server according to the total count of accesses to the code corresponding to the information server.

The above medium holds the program for the aforementioned server computer according to the present invention.

Also the above object can be attained by providing a medium having recorded therein a program for operation of an information utilizing system in which a server computer, a plurality of information servers and user-side terminal devices are connected to one another via a network so that the user-side terminal devices can utilize information provided from the information servers by accessing the information servers, the program implementing, according to the present invention, functions of:
storage means for storing, in a corresponding relation, identification information used for access to the information servers and codes each having an arbitrary number of digits;
identification information conversion means operating, when a user-side terminal enters any of the codes, to take out identification information on one, corresponding to the entered code, of information servers from the storage means and send the identification information to the terminal device;
counting means for counting each access the user-side terminal device has to an information server by entering a code corresponding to the information server;
first total access count calculating means for calculating a total count of accesses to each of the codes based on the access count supplied from the counting means; and
charging means for charging each user according to a total count of accesses the user has obtained.

The above medium holds the program for the aforementioned server computer according to the present invention.

Also the above medium has recorded therein codes each having an arbitrary number of digits in a corresponding relation with identification information the user-side terminal devices use for access to the information servers via the network.

Further the above medium has recorded therein data used by each of the aforementioned server computers.

Note that in all the aforementioned aspects of the present invention, the network has only to connect the information servers, user-side terminal devices, server computers and a charging server to each other directly or via a gate way for mutual information exchange between them and so it may be either a cable or wireless network.

These objects and other objects, features and advantages of the present invention will become more apparent from the following detailed description of the best mode for carrying out the present invention when taken in conjunction with the accompanying drawings.

### Brief Description of the Drawings

FIG. 1 schematically illustrates a first embodiment of the information utilizing system according to the present invention.
FIG. 2 is a schematic block diagram of the information utilizing system in FIG. 1.
FIG. 3 illustrates a customer part of a hatch server.
FIG. 4 shows a customer data.
FIGS. 5 and 6 show together a hatch data.
FIG. 7 shows a user interface data.
FIGS. 8 and 9 show together a usage record data.
FIG. 10 shows a flow of operations made when the information utilizing system is used by a terminal device.
FIG. 11 shows an example flow of charging operations.
FIG. 12 shows another flow of charging operations.
FIG. 13 shows a relation between a hatch number and priority.
FIG. 14 shows still another flow of charging operations.
FIG. 15 shows yet another flow of charging operations.
FIG. 16 schematically illustrates the construction of the cascaded hatch server system.
FIG. 17 shows a hatch data recorded in a mother hatch server in the cascaded hatch server system.
FIG. 18 also shows a hatch data recorded in the mother hatch server in the cascaded hatch server system.
FIG. 19 also shows a hatch data recorded in a sub hatch server in the cascaded hatch server system.

### Best Mode for Carrying Out the Invention

The embodiments of the present invention will be described in detail herebelow with reference to the accompanying drawings.

### 1. First embodiment

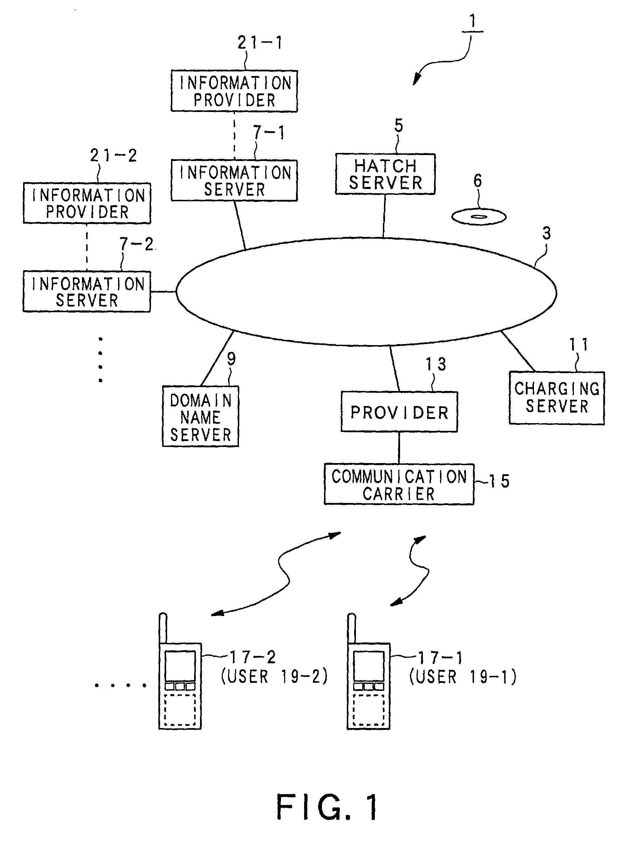

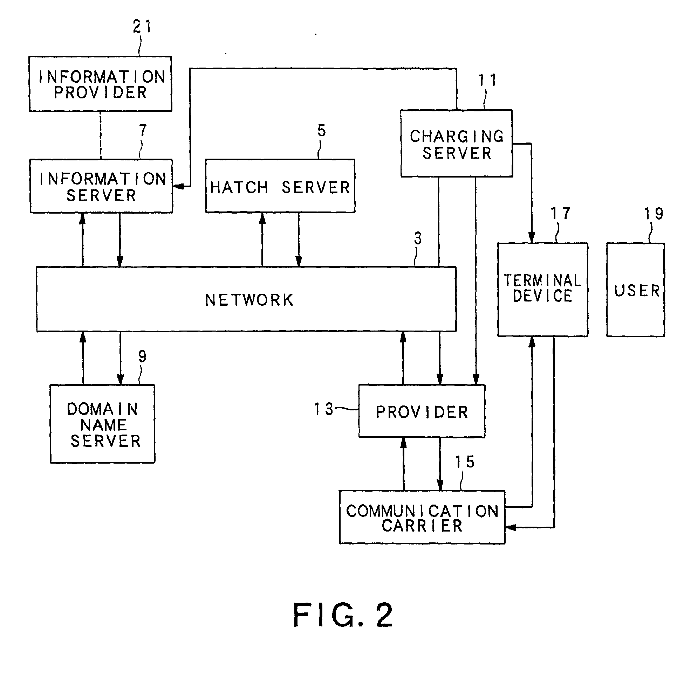

FIGS. 1 and 2 schematically show together the first embodiment of the information utilizing system according to the present invention. The information utilizing system is generally indicated with a reference 1.

The reference number 3 indicates a network such as Internet. The network 3 includes a hatch server 5, information servers, 7-1, 7-2, ..., domain name server 9, charging server 11, provider 13, etc.

The provider 13 has a communication carrier 15 connected thereto to which terminal devices 17-1, 17-2, ... such as a mobile telephone or the like are further connected.

The hatch server 5 will be described in detail later. Briefly, it searches a hatch number sent from the terminal device 17 for identification information such as URL or the like, sends the identification information back to the terminal device 17, and makes charging and other operations. The charging operation may be done by the charging server 11. Alternatively, a dedicated charging server may be provided separately.

A program for implementing the operations of the hatch server 5 and data to be recorded into the hatch server 5 may be held in a recording medium such as a CD-ROM 6. Such program and data may be distributed over the network 3.

The information servers 17-1, 17-2, ... are to provide a home page for an enterprise or the like for example, and they are managed by the information providers 21-1, 21-2, ....

The domain name server 9 is to make conversion between a domain name and IP address. It searches URL or the like sent from the terminal device 17 for an IP address, and sends it back to the latter.

The charging server 11 calculates a charge on the basis of counted information, and then outputs it by printing or electronically. Also, the charging server 11 further calculates an amount charge to each user 19 for a due period.

The provider 13 connects to the network 3 and makes a logical connection between the terminal device 17 connected thereto via the communication carrier 15 and the network 3 to enable information transmission between the terminal device 17 and network 3.

The communication carrier 15 is a transmission medium provided by a communication service company like NTT or the like to make a connection between the terminal device 17 and provider 13 for enabling the information transmission between them.

The terminal device 17 is a mobile phone, portable computer, desktop computer or the like used by the user 19.

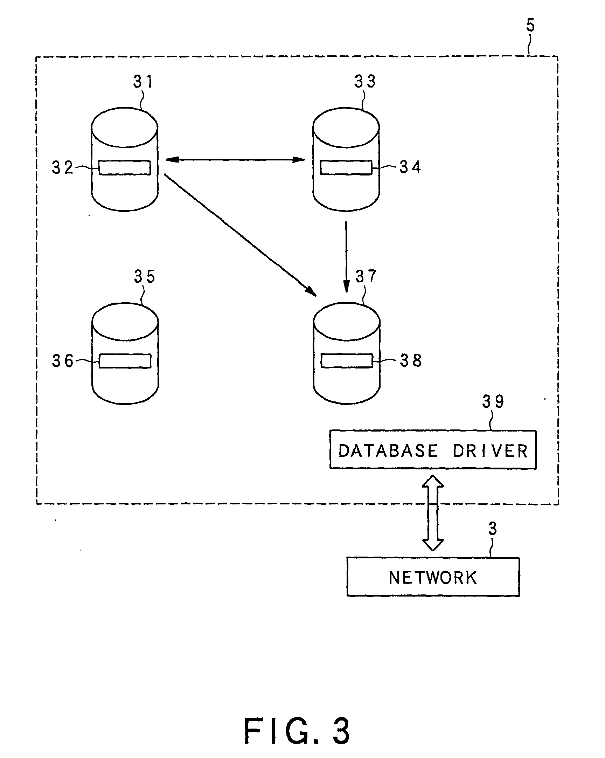

FIG. 3 schematically illustrates the structure of a database in the hatch server 5. As shown, the hatch server 5 includes a customer database 31, hatch database 33, user interface database 35, usage record database 37, database driver 39, etc.

Note that the hatch server 5 searches each of the databases by a search program built therein.

The customer database 31 includes customer data 32. The hatch database 33 includes a hatch data 34. The user interface database 35 includes a user interface data 36. The usage record database 37 includes a usage record data 38.

The database driver 39 connects to the network 3.

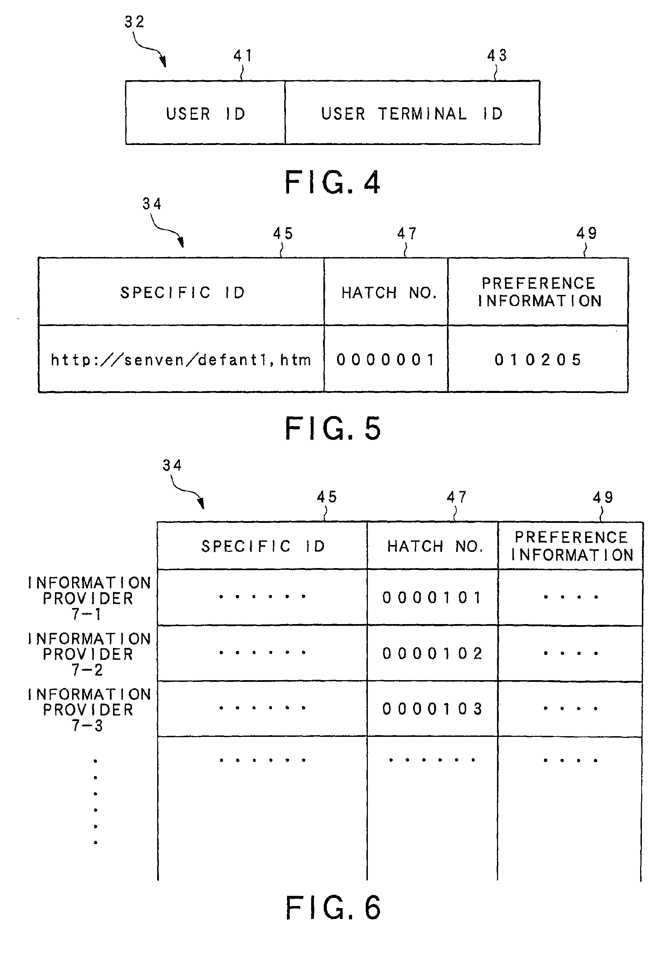

FIG. 4 shows the customer data 32. As shown, the customer data 32 includes a user ID 41 and user terminal ID 43. The user ID 41 is an identification number for identification of the user 19. The user terminal ID 43 is an identification number for identification of the terminal device 17. The customer database 31 has the user terminal ID 43 recorded therein in a corresponding relation with the user ID 41.

FIGS. 5 and 6 show together the hatch data 34. As shown, the hatch data 34 includes fields such as a specific ID 45, hatch number 47, preference information 49, etc. The specific ID 45 is an identification number (URL or the like) indicative of a home page of the information server 7-1 and the like. The hatch number 47 is a number by which the user 19 serviced by the information utilizing system 1 can simply access a predetermined one of the information servers 7. That is, the hatch number 47 is a number composed of more than one numeral and a unique string of numeral identifies one information source. Normally, one information source is one information server, but a plurality of servers is formed by the mirroring technique in some cases. That is, in case the user 19 specifies a 7-digit number "1234567" for example, solely the ID 45 corresponds to the number. As a result, when the user 19 specifies this number, a unique URL, for example, is determined, whereby it is possible to simply access a predetermined one of the information servers 7. For example, a 7-digit number is assigned as a hatch number and the specific ID 45 (URL or the like) of each information server 7 corresponds to the hatch number. The preference information 49 indicates the attribute or the like of the information server 7. In case the preference information is "010205", "01" indicates a Tokyo area, "02" indicates a restaurant and "05" indicates an Italian restaurant, for example.

As shown in FIG. 6, the hatch data 34 has URL of the information provider 7-1 written in the specific ID field 45 thereof, "0000101" written in the hatch number field 47 and data recorded in the preference information field 49. This is also true with the information providers 7-2 and 7-3 except for "0000102" and "0000103" written in the hatch number field 47 of the hatch date 34.

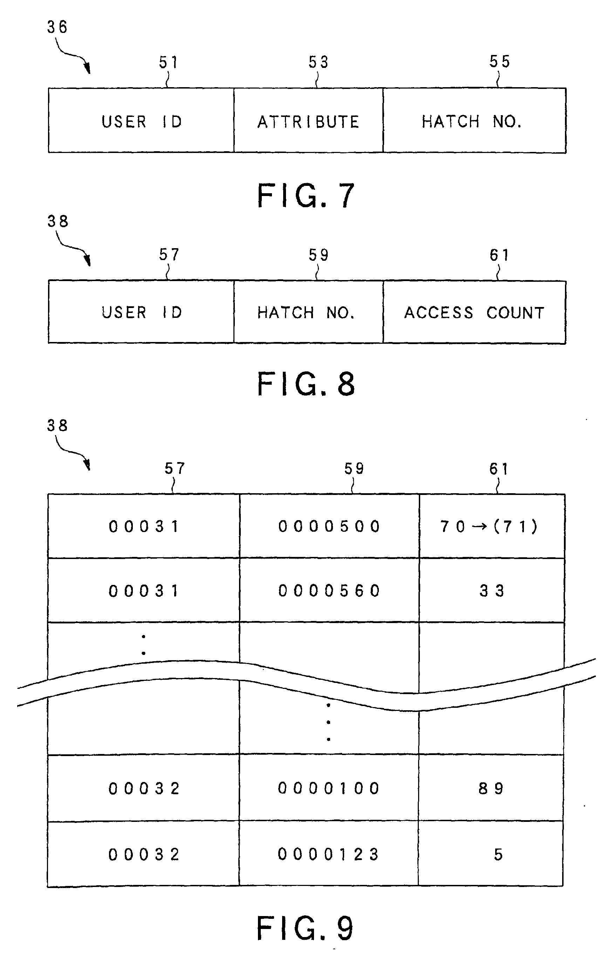

FIG. 7 shows the user interface data 36. As shown, the user interface data 36 includes fields such as user ID 51, attribute 53, hatch number 55, etc. Similar to the user ID 41, the user ID 51 is a number for identification of the user 19. The attribute 53 is information similar to the preference information 49. The hatch number 55 is information similar to the hatch number 47. As shown in FIG. 7, the attribute 53 and hatch number 55 are recorded correspondingly to the user ID 51.

FIG. 8 shows the usage record data 38. As shown, the usage record data 38 includes a user ID 57, hatch number 59, access count 61, etc. Similar to the user ID 41, the user ID 57 is a number for identification of the user 19. The hatch number 59 is similar to the hatch number 47. The access count 61 indicates a recorded number of accesses the user 19 identified by the user ID 57 has obtained to the information server 7 corresponding to the hatch number 59.

FIG. 9 shows a detailed example of the usage record data 38. In this example, the user whose ID (user ID 57) is "31" has accessed, 70 times, the information server 7 whose hatch number 59 is "500". This user has obtained 33 accesses to the information server 7 whose hatch number 59 is "560". A total count of accesses each user 19 has obtained to each information server 7 is recorded in the access count 61.

The information utilizing system 1 constructed as above functions as will be outlined below:

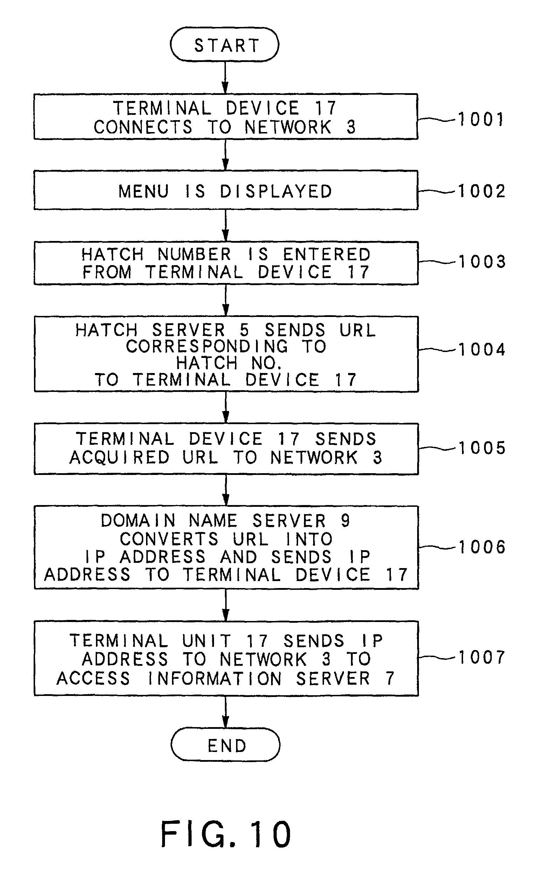

FIG. 10 is a flow chart showing operations made when the user 19 uses the information utilizing system 1. The user 19 connects to the network 3 from his terminal device 17 in the i mode (trade name) or the like (in step 1001). A menu screen appears on the terminal device 17 (in step 1002). When the user 19 wants to access a desired one of the information servers 7, he makes input of a hatch number corresponding to that information server 7 at his terminal device 17 (in step 1003). The hatch number is born in mind or recorded like an address book in his terminal device 17.

The hatch number is sent to the hatch server 5 over the network 3. The hatch server 5 acquires URL corresponding to the hatch number and sends it to the terminal device 17 (in step 1004). That is, the hatch server 5 refers to the hatch data 34 shown in FIG. 5 to search for the specific ID (URL) 45 corresponding to the hatch number 47 sent from the terminal device 17. At this time, the hatch server 5 will rewrite the usage record data 38 in the usage record database 37. For example, when a user whose user ID 57 is "31" accesses the information server 7 whose hatch number 59 is "500", the hatch server 5 will change the access count 61 from "70" to "71" by adding "1" to the existing "70" as shown in FIG. 9.

The terminal device 17 sends the acquired URL again to the network 3 (in step 1005), and the domain name server 9 converts URL into an IP address and sends the IP address to the terminal device 17 (in step 1006). The terminal device 17 sends the IP address to the network 3 to access the information server 7 for getting information in the information server 7 (in step 1007). Thus, each of the users 19-1, 19-2, ... accesses each of the information servers 7-1, 7-2, ....

Next, the charging operations effected in the information utilizing system 1 will be described:

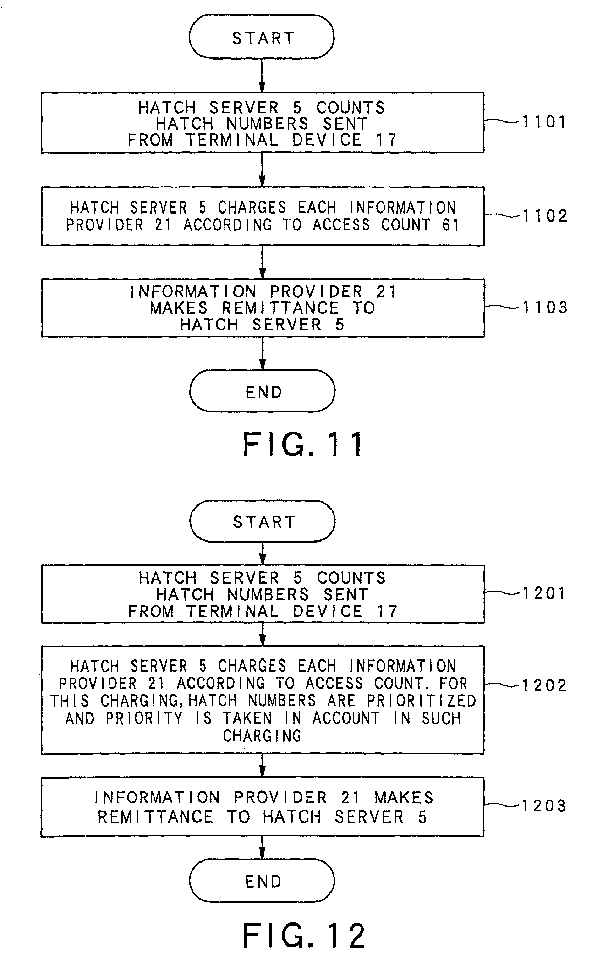

FIG. 11 is a flow chart showing charging operations made by the hatch server 5 in the information utilizing system 1. As previously mentioned, for using the information utilizing system 1, the user 19 enters a hatch number (in step 1003 in FIG. 10). The hatch server 5 counts hatch numbers sent from the terminal device 17 (in step 1101). That is, an access count 61 is written into the usage record data 38 correspondingly to the user ID 57 and hatch number 59.

Next, the hatch server 5 charges each information provider 21 according to the access count (in step 1102). That is, since accesses each user 19 has to an information server 7 corresponding to each hatch number are recorded in the usage record data 38 as shown in FIGS. 8 and 9, so the accesses are totaled to provide a total count of accesses to each hatch number. The "total access count" referred to herein is as follows. On the assumption that the information provider 21 whose hatch number is "500" has been accessed "500" times by the user 19-1 and "300" times by the user 19-2, for example, the total access count is "800". In this way, accesses to the information provider 21 whose hatch number is "500" will count "3000" in total while those to the information provider 21 whose hatch number is "501" count "4000" in total, for example. The information providers 21 are charged according to a ratio between the access counts. In case the information provided 21-1 has been accessed 3000 times while the information provider 21-2 has been accessed 4000 times, for example, the access count ratio is 3 : 4. Namely, the hatch server 5 will charge the information providers 21-1 and 21-2 for their accesses at the ratio of 3 : 4. Actually, the charging server 11 will bill each of the information providers 21-1 and 21-2 and these information providers 21 will make due remittance to the hatch server 5 (in step 1103). According to the present invention, since the information server 7 can be charged according to a total count of accesses thereto, and thus a streamlined charging is possible.

FIG. 12 is a another example flow chart showing charging operations made by the hatch server 5 in the information utilizing system 1. As in the flow chart in FIG. 11, the hatch server 5 counts hatch numbers sent from the terminal device 17 (in step 1201). The hatch server 5 charges each of the information providers 21 according to an access count. In this case, however, each of the hatch numbers is assigned a priority and the priority is taken in account (in step 1202).

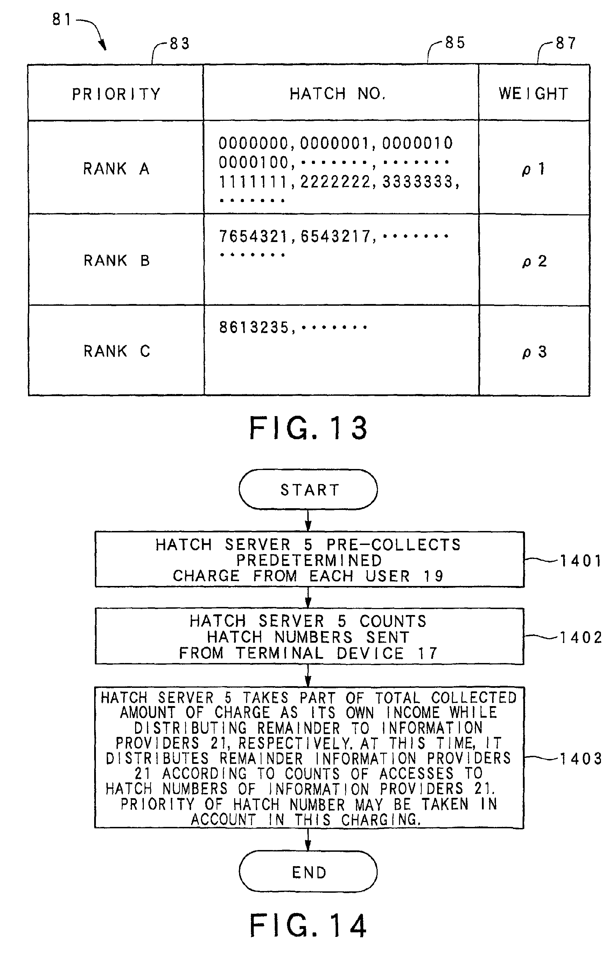

FIG. 13 shows a table 81 showing the relation of a priority 83 and hatch number 85. The hatch server 5 holds this table 81. Since the user 19 uses a hatch number by remembering it as previously mentioned or similarly, a hatch number easier to memorize can be said to have a higher priority. As shown in FIG. 13, the priority is categorized in three ranks A to C so that a hatch number of a rank A has the highest priority and a hatch number of a rank C has the lowest priority. For example, 7-digit hatch numbers of the rank A include "0000000", "0000001", "0000010", ..., "1111111", "2222222", etc., for example. Seven-digit hatch numbers of the rank B include "7654321", "6543217", "5432176", ..., etc., for example. Seven-digit hatch numbers of the rank C include random numbers like "8613235", ..., etc., for example. Weights ρ1, ρ2 and ρ3 are set for the ranks A, B and C, respectively.

As previously mentioned, accesses to each hatch number are totaled to charge each information server (or information provider). In this case, however, the priority is additionally taken in account in such charging. In case the total count of accesses to the hatch number "0000000" is 4000 and that to the hatch number "8613235" is 200, for example, the hatch server 5 will charge the information servers 7 corresponding to the former and latter hatch numbers, respectively, at a ratio of (40 × ρ1) : (2 × ρ2).

Note that the prioritization is not limited to that shown in FIG. 13. In FIG. 13, the priority is categorized in three ranks, for example, but the priority may be categorized in 5 or 10 ranks or each hatch number may be assigned a priority.

Then, the information provider 21 makes remittance to the hatch server 5 (in step 1203).

According to the present invention, a higher priority is assigned to an easier-to-memorize hatch number, and thus a more streamlined charging is possible.

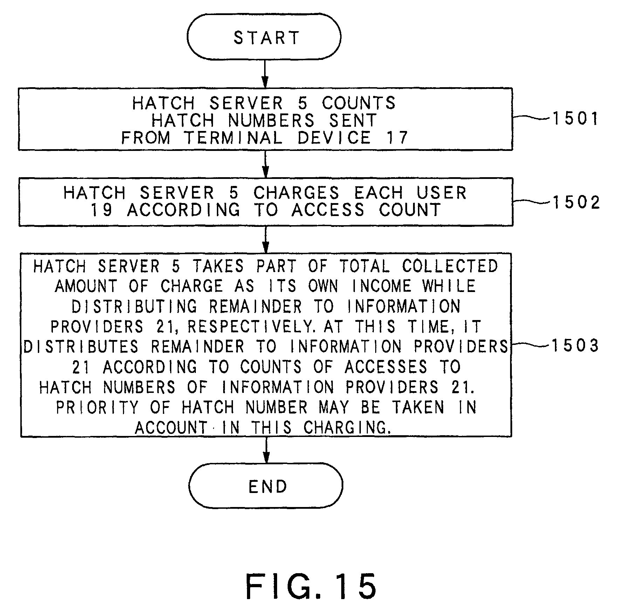

FIG. 14 shows still another example flow of charging operations made by the hatch server 5 in the information utilizing system 1. It should be noted that in the charging procedures shown in FIGS. 14 and 15, charging is made from the side of each user 19. As shown in FIG. 14, the hatch server 5 pre-collects a predetermined charge from each user 19 (in step 1401). It should be noted that this charge collection may not be done by the hatch server 5 but it may be such that the user 19 should pay a predetermined amount periodically (once a month, for example) under a contract for membership to the information utilizing system 1. As mentioned above, the hatch server 5 counts hatch numbers sent from the terminal device 17 (in step 1402). That is, accesses to each information server 7 are totaled. The hatch server 5 takes a part of the total collected amount of charge as its own income while distributing the remainder to each of the information providers 21 for the services provided by the latter to the users. The "total collected amount of charge" is a total amount of charge collected from the users 19. At this time, the total collected amount of charge is distributed to the information providers 21 according to the respective total counts of accesses to the hatch numbers of the information providers 21. In case the hatch numbers are prioritized as above, the distribution of the total collected amount of charge may be done with the priority taken in account (in step 1403). On the assumption that there are only two information servers 7-1 and 7-2, for example, in case the ratio in total access count between the information servers 7-1 and 7-2 is 4 : 3, the hatch server 5 takes a part of the total collected amount of charge as its own income while distributing the remainder to each of the information servers 7-1 and 7-2 at the ratio of 4 : 3 for their respective services provided by the latter to the users. Also, in case the hatch numbers are prioritized as shown in FIG. 13, the collected amount of charge is distributed to the information servers 7, respectively, with the priority ranks being weighted.

FIG. 15 shows yet another example flow of charging operations made by the hatch server 5 in the information utilizing system 1. As mentioned above, the hatch server 5 counts hatch numbers sent from the terminal devices 17 (in step 1501). The hatch server 5 charges each of the users 19 according to an access count. As shown in FIG. 8, the usage record database 37 records the access count 61 in a corresponding relation with the user ID 57 and hatch number 59. Thus, a total account of accesses to the user ID 57 can be calculated. When the user 19-1 has had 100 accesses to the information server 7-1 and 200 accesses to the information server 7-2, for example, the total access count is 300. The hatch server 5 will charge the user 19 according to this total access count (in step 1502). On the assumption that there are only two users 19, for example, in case the total count of accesses the user 19-1 has obtained is 5000 and that the user 19-2 has obtained is 4000, the hatch server 5 will charge the users 19-1 and 19-2 at a ratio of 5 : 4.

Next, the hatch server 5 takes a part of the total collected amount of charge as its own income while distributing the remainder to the information providers 21 for their services provided by the latter, respectively. Also, the priority of the hatch number may be taken in account in this charging (in step 1503). For example, the hatch server 5 takes a part of the amount charged on the users 19 and collected from the users 19 (in step 1502) while distributing the remainder to the information providers 21 according to the counts of accesses to the latter, respectively. On the assumption that there are only two information providers 21, in case the information server 7-1 has been accessed 3000 times while the information server 7-2 has been accessed 2000 times, the hatch server 5 will distribute the remainder of the total collected amount of charge to the information servers 7-1 and 7-2 at a ratio of 3 : 2. At this time, in case the hatch numbers are prioritized as shown in FIG. 13, the remainder can also be distributed to the information servers 7-1 and 7-2 with the ranks being weighted. Thus, according to the present invention, each of the users can be charged in a streamlined manner and also the collected charge can be distributed to the information providers 21 in a streamlined manner.

Note that the present invention is not limited to the aforementioned embodiments but can be modified and varied in various forms. For example, in the aforementioned embodiments, the information providers 21 or users 19 are charged. However, both may be charged. That is, the users 19 may be charged as shown in FIG. 11 while the information providers 21 be charged as shown in FIG. 14. In this case, the information providers 21 are rewarded. Also, the information providers 21 may be charged as shown in FIG. 11 while the user 19 be charged as shown in FIG. 15. Also in this case, the information providers 21 are rewarded.

### 2. Second embodiment

In the foregoing, the present invention has been described concerning the information utilizing system 1 having only one hatch server 5. However, the present invention is not limited to the aforementioned embodiments but is applicable to an information utilizing system with the hatch server 5 composed of a plurality of servers. That is, a hatch server capable of converting one hatch number with respect to the user 19 can make the aforementioned charging.

A plurality of hatch servers can be used in many ways for converting one hatch number. In case a backup hatch server is provided, a plurality of hatch servers which play different roles can be used to convert the hatch number. As an example of the latter, a hatch server formed from a plurality of hierarchical layers will be described.

This is a hatch server formed from a plurality of hatch server layers cascaded to each other. That is, in case a predetermined upper digit of the hatch number corresponds to a number stored in a first hatch server (will be referred to as "mother hatch server" hereunder), the mother hatch server does not identify any information provider but a second hatch server (will be referred to as "sub hatch server" hereunder), and the second hatch server solves a predetermined digit next to the predetermined upper digit to identify an information provider. Of course, this is the case that the hatch server consists of two layers but the hatch server may be composed of three or four layers. This system will be referred to as "cascaded hatch server system" herein and an embodiment of this cascaded hatch server system will be described herebelow.

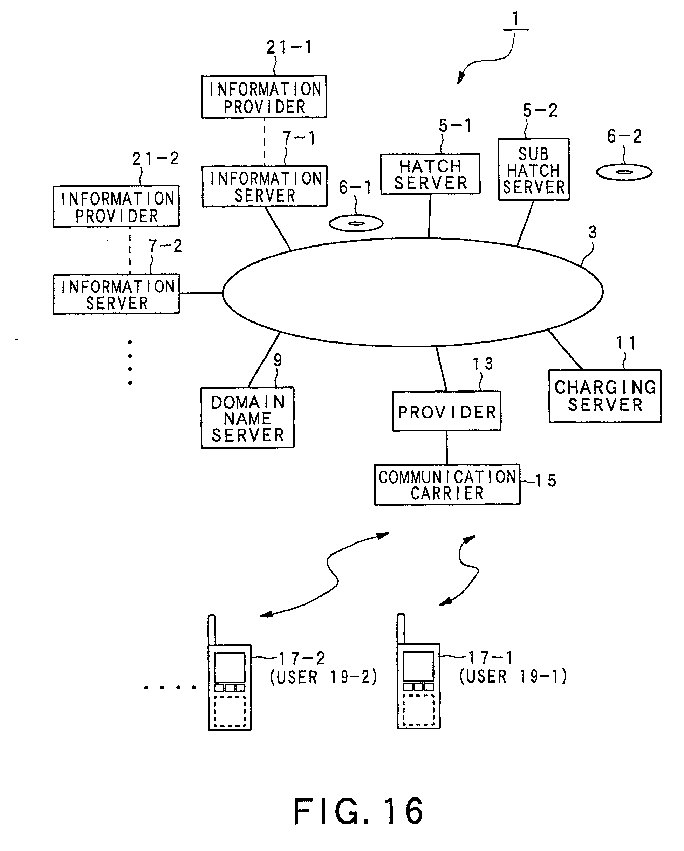

First, the cascaded hatch server system will be described in detail with reference to FIGS. 16 to 18.

### 2.1 Overview of the cascaded hatch servers

FIG. 16 schematically illustrates the construction of the cascaded hatch server system.

The network 3 such as Internet has connected thereto a hatch server 5-1, sub hatch server 5-2, information servers, 7-1, 7-2, ..., domain name server 9, charging server 11, provider 13, etc.

The provider 13 has a communication carrier 15 connected thereto to which terminal devices 17-1, 17-2, ... such as a mobile telephone or the like are further connected.

The hatch server 5-1 is a mother hatch server. On the assumption that the hatch number for a predetermined one of the information servers 7 is of seven digits for example, the hatch server 5-1 has stored therein a number represented by numerals at upper three digits of the hatch number for the information server 7.

When the terminal device 17 sends a hatch number represented by the above upper three digits, a number represented by the lower four digits of the hatch number is sent to the sub hatch server 5-2.

The sub hatch server 5-2 holds an address such as URL of the information server 7 according to a number represented by the lower four digits of the hatch number. Receiving the number represented by the lower four digits of the hatch number from the hatch server 5-1, the sub hatch server 5-2 will search for address information such as URL and send it back to the terminal device 17.

Besides, the hatch server 5-1 and sub hatch server 5-2 make charging and other operations.

Note that the charging may be done by the charging server 11 or by a dedicated charging server provided separately.

A program for implementing the operations of the hatch server 5-1 and sub hatch server 5-2 and data to be recorded in the hatch server 5-1 and sub hatch server 5-2 may be held in recording media such as CD-ROMs 6-1 and 6-2.

Note that such program and data may be distributed over the network 3.

The information servers 7-1 and 7-2, domain name server 9, charging server 11, provider 13 and communication carrier 15 are the same as aforementioned and thus will not be explained any more.

### 2.2 Detailed description of the cascaded hatch servers

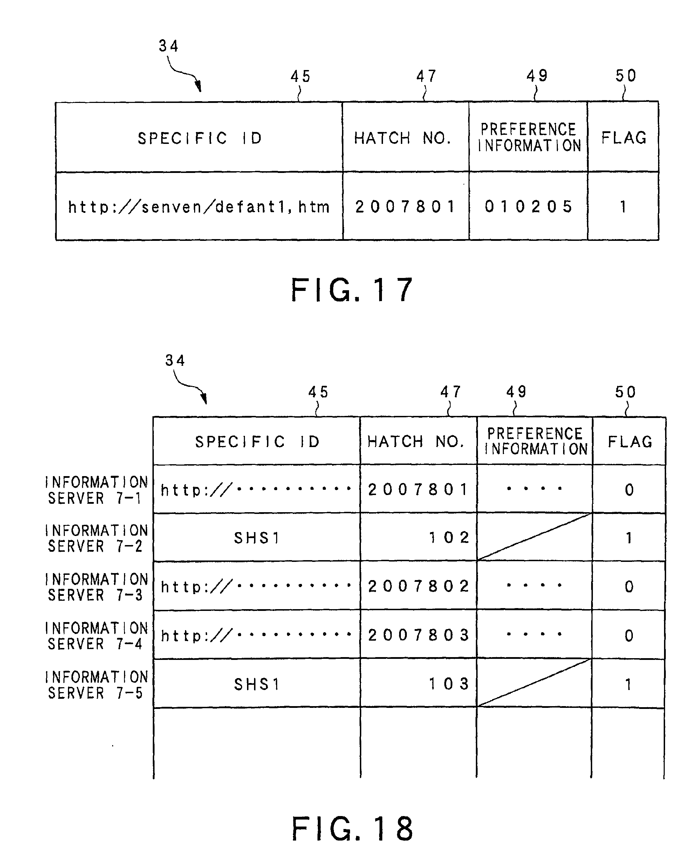

Further, the hatch servers will be described in detail with reference to FIGS. 17 through 19.

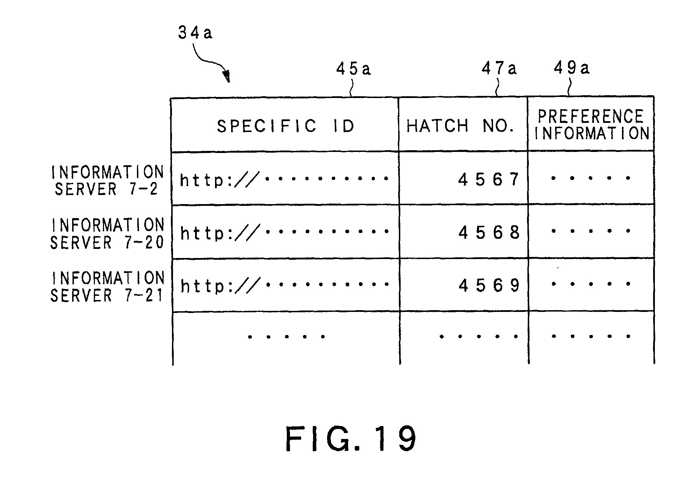

FIGS. 17 and 18 show together a hatch data 34 recorded in the mother hatch server 5-1. FIG. 19 shows a hatch data 34a recorded in the sub hatch server 5-2. The hatch data 34 includes fields such as a specific ID 45, hatch number 47, preference information 49, flag 50, etc.

The specific ID 45, hatch number 47 and preference information 49 are the same as having previously been described with reference to FIG. 5 and so will not further described.

The flag 50 indicates whether the information server 7 is connected to the sub hatch server 5-2 or not. When the flag 50 is "1", the information server 7 is connected to the sub hatch server 5-2. On the other hand, when the flag 50 is "0", the information server 7 is not connected to the sub hatch server 5-2.

In case of the cascaded hatch server system, when the information server is connected to the sub hatch server 5-2, a number represented by the upper three digits of a hatch number is set smaller than "199" instead of using the flag 50 as above. That is, the number represented by the upper three digits of the hatch number of an information server not connected to the sub hatch server 5-2 is set larger than "200" for example. In this case, the number represented by the upper three digits of the hatch number of an information server connected to the sub hatch server 5-2 is set smaller than "199".

Of course, in case the hatch number for an information server not connected to the sub hatch server is set to a number consisting of inconsecutive numerals, use of the flag 50 provides an easier management. That is, in case the number represented by the upper three digits of the hatch number is smaller than "199", the information server is connected to the sub hatch server 502. However, in case the flag 50 is cleared, it may be a better way to follow a rule under which the specific ID should be taken as an address in the information server. In the following description, it is assumed that the cascaded hatch server system functions under this mixed rule.

First, the cascaded hatch server system will be described on the assumption that the user 19 sends "2007801" as a hatch number.

As shown in FIG. 18, the hatch data 34 has URL of the information server 7-1 written in the specific ID field 45 thereof, "2007801" written in the hatch number field 47, data recorded in the preference information field 49 and "0" in the flag field 50, all as information on the information provider 7-1. Thus, when the user 19 sends "2007801" as a hatch number, the hatch server 5-1 will read the upper three digits of the hatch number to determine whether the upper three digits "200" are in the hatch number field 47 of the hatch data 34. However, since this number is not in the hatch number field 47, the hatch server 5-1 will read URL in the specific ID 45 and send it back to the terminal device 17 of the user 19.

Next, the cascaded hatch server system will be described on the assumption that the user 19 sends "1024567" as a hatch number.

As information on the information server 7-2, an address "SHS1" of the sub hatch server 5-2 is written in the specific ID field 45, "102" is written in the hatch number field 47 and "1" is written in the flag field 50. Thus, when the user 19 sends "1024567" as a hatch number, the hatch server 5-1 will read the upper three digits "102" of the hatch number, determine whether the number is in the hatch number field 47 and further check the flag field 50.

In this case, since "102" exists in the hatch number field 47 and "1" is in the flag field 50, the hatch server 5-1 will send the lower four digits "4567" of the hatch number "1024567" to the sub hatch server 5-2 according to the address "SHS1" in the specific ID field 45. Then, since the hatch data of the sub hatch server is as shown in FIG. 19, so it will be known that the lower four digits "4567" indicates the information server 7-2. Thus, the hatch server 5-1 can read URL or the like recorded in the specific ID field 45a and send it back to the terminal device 17 of the user 19.

### 2.3 Operations made in the cascaded hatch server system

Next, charging operations made in the cascaded hatch server system will be described. In this cascaded hatch server system, each hatch server should preferably have usage record data. That is, when reference is made to a hatch number associated with the record of hatch data 34 in hatch servers, having "0" in the flag field 50 for example, an information server to which the terminal device has to refer will finally be determined. When reference is made to the record, the access count 61 in the usage record data 38 recorded in the hatch server and corresponding to the hatch number associated with the information server will be increased. The charging after this change may be done as above.

As having been described in detail, the present invention can provide an information utilizing system in which a streamlined charging is possible.

### Industrial Applicability

As evident from the foregoing explanation and illustration, in the information utilizing system according to the present invention, accesses obtained to the storage means by the user-side terminal device using a code having an arbitrary number of digits are counted, a total count of accesses to each code is calculated on the basis of the access count, and each information server corresponding to each code is charged for usage of the information utilizing system according to the total access count, whereby a streamlined charging for the accesses to information can be done.

## Claims

1. In an information utilizing system in which a plurality of information servers and user-side terminal devices are connected to each other via a network so that the user-side terminal devices can utilize information provided from the information servers by accessing the information servers, the information utilizing system is
**characterized by** comprising:
storage means for storing, in a corresponding relation, identification information used for access to the information servers and codes each having an arbitrary number of digits;
identification information conversion means operating, when a user-side terminal enters any of the codes, to take out identification information on one, corresponding to the entered code, of information servers from the storage means and send the identification information to the terminal device;
counting means for counting each access the user-side terminal device has to an information server by entering a code corresponding to the information server;
total access count calculating means for calculating a total count of accesses to each of the codes based on the access count supplied from the counting means; and
charging means for charging an information server corresponding to each code according to a total count of accesses to the code.

2. The system as set forth in claim 1, wherein:
each of the codes is given a priority; and
the charging means charges each of the information servers based on the priority of the code corresponding to the information server.

3. In an information utilizing system in which a plurality of information servers and user-side terminal devices are connected to each other via a network so that the user-side terminal devices can utilize information provided from the information servers by accessing the information servers, the information utilizing system is **characterized by** comprising:
storage means for storing, in a corresponding relation, identification information used for access to the information servers and codes each having an arbitrary number of digits;
identification information conversion means operating, when a user-side terminal enters any of the codes, to take out identification information on one, corresponding to the entered code, of information servers from the storage means and send the identification information to the terminal device;
counting means for counting each access the user-side terminal device has to an information server by entering a code corresponding to the information server;
total access count calculating means for calculating a total count of accesses to each of the codes based on the access count supplied from the counting means; and
distribution means for collecting a predetermined amount of charge from each user and distributing the collected amount to each information server according to the total count of accesses to the code corresponding to the information server.

4. The system as set forth in claim 3, wherein:
each of the codes is assigned a priority; and
the charging means distributes the collected amount of charge to each of the information servers based on the priority of the code corresponding to the information server.

5. In an information utilizing system in which a plurality of information servers and user-side terminal devices are connected to each other via a network so that the user-side terminal devices can utilize information provided from the information servers by accessing the information servers, the information utilizing system is **characterized by** comprising:
storage means for storing, in a corresponding relation, identification information used for access to the information servers and codes each having an arbitrary number of digits;
identification information conversion means operating, when a user-side terminal enters any of the codes, to take out identification information on one, corresponding to the entered code, of information servers from the storage means and send the identification information to the terminal device;
counting means for counting each access the user-side terminal device has to an information server by entering a code corresponding to the information server;
first total access count calculating means for calculating a total count of accesses to each of the codes based on the access count supplied from the counting means; and
charging means for charging each user according to a total count of accesses the user has obtained.

6. The system as set forth in claim 5, is **characterized by** further comprising:
second total access count calculating means for calculating a total count of accesses to each of the codes based on the access count; and
distribution means for distributing an amount of charge collected by the charging means to each of the information servers according to the total count of accesses to the code corresponding to the information server.

7. The system as set forth in claim 6, wherein:
each of the codes is assigned a priority; and
the distribution means distributes the collected amount of charge to each of the information servers based on the priority of the code corresponding to the information server.

8. In a server computer connected to a plurality of information servers and user-side terminal devices via a network, the server computer is **characterized by** comprising:
storage means for storing, in a corresponding relation, identification information used for access to the information servers and codes each having an arbitrary number of digits;
identification information conversion means operating, when a user-side terminal enters any of the codes, to take out identification information on one, corresponding to the entered code, of information servers from the storage means and send the identification information to the terminal device;
counting means for counting each access the user-side terminal device has to an information server by entering a code corresponding to the information server;
total access count calculating means for calculating a total count of accesses to each of the codes based on the access count supplied from the counting means; and
charging means for charging an information server corresponding to each code according to a total count of accesses to the code.

9. The server computer as set forth in claim 8, wherein:
each of the codes is a priority; and
the charging means charges each of the information servers based on the priority of the code corresponding to the information server.

10. In a server computer connected to a plurality of information servers and user-side terminal devices via a network, the server computer is **characterized by** comprising:
storage means for storing, in a corresponding relation, identification information used for access to the information servers and codes each having an arbitrary number of digits;
identification information conversion means operating, when a user-side terminal enters any of the codes, to take out identification information on one, corresponding to the entered code, of information servers from the storage means and send the identification information to the terminal device;
counting means for counting each access the user-side terminal device has to an information server by entering a code corresponding to the information server;
total access count calculating means for calculating a total count of accesses to each of the codes based on the access count supplied from the counting means; and
distribution means for collecting a predetermined amount of charge from each user and distributing the collected amount to each information server according to the total count of accesses to the code corresponding to the information server.

11. The server computer as set forth in claim 10, wherein:
each of the codes is a priority; and
the distribution means distributes the collected amount of charge to each of the information servers based on the priority of the code corresponding to the information server.

12. In a server computer connected to a plurality of information servers and user-side terminal devices via a network, the server computer is **characterized by** comprising:
storage means for storing, in a corresponding relation, identification information used for access to the information servers and codes each having an arbitrary number of digits;
identification information conversion means operating, when a user-side terminal enters any of the codes, to take out identification information on one, corresponding to the entered code, of information servers from the storage means and send the identification information to the terminal device;
counting means for counting each access the user-side terminal device has to an information server by entering a code corresponding to the information server;
first total access count calculating means for calculating a total count of accesses to each of the codes based on the access count supplied from the counting means; and
charging means for charging each user according to a total count of accesses the user has obtained.

13. The server computer as set forth in claim 12, is **characterized by** further comprising:
second total access count calculating means for calculating a total count of accesses to each of the codes based on the access count; and
distribution means for distributing an amount of charge collected by the charging means to each of the information servers according to the total count of accesses to the code corresponding to the information server.

14. The server computer as set forth in claim 13, wherein:
each of the codes is a priority; and
the distribution means distributes the collected amount of charge to each of the information servers based on the priority of the code corresponding to the information server.

15. In a medium having recorded therein a program for operation of an information utilizing system in which a server computer, a plurality of information servers and user-side terminal devices are connected to one another via a network so that the user-side terminal devices can utilize information provided from the information servers by accessing the information servers, the program is implemented functions of:
storage means for storing, in a corresponding relation, identification information used for access to the information servers and codes each having an arbitrary number of digits;
identification information conversion means operating, when a user-side terminal enters any of the codes, to take out identification information on one, corresponding to the entered code, of information servers from the storage means and send the identification information to the terminal device;
counting means for counting each access the user-side terminal device has to an information server by entering a code corresponding to the information server;
total access count calculating means for calculating a total count of accesses to each of the codes based on the access count supplied from the counting means; and
charging means for charging an information server corresponding to each code according to a total count of accesses to the code.

16. In a medium having recorded therein a program for operation of an information utilizing system in which a server computer, a plurality of information servers and user-side terminal devices are connected to one another via a network so that the user-side terminal devices can utilize information provided from the information servers by accessing the information servers, the program is implemented functions of:
storage means for storing, in a corresponding relation, identification information used for access to the information servers and codes each having an arbitrary number of digits;
identification information conversion means operating, when a user-side terminal enters any of the codes, to take out identification information on one, corresponding to the entered code, of information servers from the storage means and send the identification information to the terminal device;
counting means for counting each access the user-side terminal device has to an information server by entering a code corresponding to the information server;
total access count calculating means for calculating a total count of accesses to each of the codes based on the access count supplied from the counting means; and
distribution means for collecting a predetermined amount of charge from each user and distributing the collected amount to each information server according to the total count of accesses to the code corresponding to the information server.

17. In a medium having recorded therein a program for operation of an information utilizing system in which a server computer, a plurality of information servers and user-side terminal devices are connected to one another via a network so that the user-side terminal devices can utilize information provided from the information servers by accessing the information servers, the program is implemented functions of:
storage means for storing, in a corresponding relation, identification information used for access to the information servers and codes each having an arbitrary number of digits;
identification information conversion means operating, when a user-side terminal enters any of the codes, to take out identification information on one, corresponding to the entered code, of information servers from the storage means and send the identification information to the terminal device;
counting means for counting each access the user-side terminal device has to an information server by entering a code corresponding to the information server;
first total access count calculating means for calculating a total count of accesses to each of the codes based on the access count supplied from the counting means; and
charging means for charging each user according to a total count of accesses the user has obtained.

18. A medium having recorded therein codes each having an arbitrary number of digits in a corresponding relation with the identification information the user-side terminal devices use for access to the information servers via the network.

19. The medium as set forth in claim 18, having further the priority of the code recorded therein.

20. A terminal device used in the information utilizing system as set forth in claim 1.

21. A terminal device used in the information utilizing system as set forth in claim 3.

22. A terminal device used in the information utilizing system as set forth in claim 5.

## Amended claims

### Amended claims under Art. 19.1 PCT

**1.** (Amended) In an information utilizing system in which a plurality of information severs and user-side terminal devices are connected to each other via a network and the user-side terminal devices utilize information by accessing the information servers, the information utilizing system is **characterized by** comprising:
storage means for storing identification information used for accessing the information servers and a code having an arbitral digit number in a corresponding relation with each other;
identification information conversion means for taking out an identification information on an information server corresponding to a code from the storage means and sending it to the terminal device, when the user-side terminal device enters the code;
counting means for counting a number of times a terminal device enters a code to access an information server corresponding to the code;
total access calculating means for calculating a total count of accesses to each code according to the access count from the counting means; and
charging means for charging, with each of the codes being assigned a priority, each information server corresponding to the code according to the total count of accesses to the code and priority assigned to the code.

**2.** (Amended) In an information utilizing system in which a plurality of information severs and user-side terminal devices are connected to each other via a network and the user-side terminal devices utilize information by accessing the information servers, the information utilizing system is **characterized by** comprising:
storage means for storing identification information used for accessing the information servers and a code having an arbitral digit number in a corresponding relation with each other;
identification information conversion means for taking out an identification information on an information server corresponding to a code from the storage means and sending it to the terminal device, when the user-side terminal device enters the code;
counting means for counting a number of times a terminal device enters a code to access an information server corresponding to the code;
total access calculating means for calculating a total count of accesses to each code according to the access count from the counting means; and
distribution means for distributing a predetermined amount of charge collected from each user to each information server according to the total count of accesses to the code corresponding to the information server.

**3.** (Amended) The system as set forth in claim 2, wherein:
each of the codes is assigned a priority; and
the distribution means distributes the collected amount of charge to each of the information servers based on the priority of the code corresponding to the information server.

**4.** (Amended) In an information utilizing system in which a plurality of information severs and user-side terminal devices are connected to each other via a network and the user-side terminal devices utilize information by accessing the information servers, the information utilizing system is **characterized by** comprising:
storage means for storing identification information used for accessing the information servers and a code having an arbitral digit number in a corresponding relation with each other;
identification information conversion means for taking out an identification information on an information server corresponding to a code from the storage means and sending it to the terminal device, when the user-side terminal device enters the code;
counting means for counting a number of times a terminal device enters a code to access an information server corresponding to the code;
first total access calculating means for calculating a total count of accesses to each code according to the access count from the counting means; and
charging means for charging each user according to the total count of accesses by the user.

**5.** (Amended) The server computer as set forth in claim 4, is **characterized by** further comprising:
second total access count calculating means for calculating a total count of accesses to each of the codes based on the access count; and
distribution means for distributing an amount of charge collected by the charging means to each of the information servers according to the total count of accesses to the code corresponding to the information server.

**6.** (Amended) The system as set forth in claim 5, wherein:
each of the codes is assigned a priority; and
the distributing means distributes the collected amount of charge to each of the information servers based on the priority of the code corresponding to the information server.

**7.** (Amended) In a server computer connected to a plurality of information servers and user-side terminal devices via a network, the server computer is
**characterized by** comprising:
storage means for storing identification information used for accessing the information servers and a code having an arbitral digit number in a corresponding relation with each other;
identification information conversion means for taking out an identification information on an information server corresponding to a code from the storage means and sending it to the terminal device, when the user-side terminal device enters the code;
counting means for counting a number of times a terminal device enters a code to access an information server corresponding to the code;
total access calculating means for calculating a total count of accesses to each code according to the access count from the counting means; and
charging means for charging, with each of the codes being assigned a priority, each information server corresponding to the code according to the total count of accesses to the code and priority assigned to the code.

**8.** (Amended) In a server computer connected to a plurality of information servers and user-side terminal devices via a network, the server computer is
**characterized by** comprising:
storage means for storing identification information used for accessing the information servers and a code having an arbitral digit number in a corresponding relation with each other;
identification information conversion means for taking out an identification information on an information server corresponding to a code from the storage means and sending it to the terminal device, when the user-side terminal device enters the code;
counting means for counting a number of times a terminal device enters a code to access an information server corresponding to the code;
total access calculating means for calculating a total count of accesses to each code according to the access count from the counting means; and
distribution means for distributing a predetermined amount of charge collected from each user to each information server according to the total count of accesses to the code corresponding to the information server.

**9.** (Amended) The server computer as set forth in claim 8, wherein:
each of the codes is assigned a priority; and
the distributing means distributes the collected amount of charge to each of the information servers based on the priority of the code corresponding to the information server.

**10.** (Amended) In a server computer connected to a plurality of information servers and user-side terminal devices via a network, the server computer is
**characterized by** comprising:
storage means for storing identification information used for accessing the information servers and a code having an arbitral digit number in a corresponding relation with each other;
identification information conversion means for taking out an identification information on an information server corresponding to a code from the storage means and sending it to the terminal device, when the user-side terminal device enters the code;
counting means for counting a number of times a terminal device enters a code to access an information server corresponding to the code;
first total access calculating means for calculating a total count of accesses to each code according to the access count from the counting means; and
charging means for charging each user according to the total count of accesses by the user.

**11.** (Amended) The server computer as set forth in claim 10, is **characterized by**
further comprising:
second total access count calculating means for calculating a total count of accesses to each of the codes based on the access count; and
distribution means for distributing an amount of charge collected by the charging means to each of the information servers according to the total count of accesses to the code corresponding to the information server.

**12.** (Amended) The server computer as set forth in claim 11, wherein:
each of the codes is assigned a priority; and
the distributing means distributes the collected amount of charge to each of the information servers based on the priority of the code corresponding to the information server.

**13.** (Amended) In a medium having recorded therein a program for operation of an information utilizing system in which a server computer, a plurality of information servers and user-side terminal devices are connected to one another via a network so that the user-side terminal devices can utilize information provided from the information servers by accessing the information servers, the program is implemented functions of:
storage means for storing identification information used for accessing the information servers and a code having an arbitral digit number in a corresponding relation with each other;
identification information conversion means for taking out an identification information on an information server corresponding to a code from the storage means and sending it to the terminal device, when the user-side terminal device enters the code;
counting means for counting a number of times a terminal device enters a code to access an information server corresponding to the code;
total access calculating means for calculating a total count of accesses to each code according to the access count from the counting means; and
distribution means for distributing a predetermined amount of charge collected from each user to each information server according to the total count of accesses to the code corresponding to the information server.

**14.** (Amended) In a medium having recorded therein a program for operation of an information utilizing system in which a server computer, a plurality of information servers and user-side terminal devices are connected to one another via a network so that the user-side terminal devices can utilize information provided from the information servers by accessing the information servers, the program is implemented functions of:
storage means for storing identification information used for accessing the information servers and a code having an arbitral digit number in a corresponding relation with each other;
identification information conversion means for taking out an identification information on an information server corresponding to a code from the storage means and sending it to the terminal device, when the user-side terminal device enters the code;
counting means for counting a number of times a terminal device enters a code to access an information server corresponding to the code;
first total access calculating means for calculating a total count of accesses to each code according to the access count from the counting means; and
charging means for charging each user according to the total count of accesses by the user.

**15.** (Amended) The medium as set forth in claim 14, wherein the user-side terminal device has recorded therein codes each having an arbitrary number of digits in a corresponding relation with the identification information the user-side terminal devices use for access to the information servers via the network.

**16.** (Amended) The medium as set forth in claim 15, having further recorded a priority assigned to each of the codes.

**17.** (Amended) A terminal device used in the information access system as set forth in claim 1.

**18.** (Amended) A terminal device used in the information access system as set forth in claim 2.

**19.** (Amended) A terminal device used in the information access system as set forth in claim 4.

**20.** (Deleted)

**21.** (Deleted)

**22.** (Deleted)
